# EUROPÄISCHE PATENTSCHRIFT

(11) **EP 3 497 311 B1**
(45) Veröffentlichungstag und Bekanntmachung des Hinweises auf die Patenterteilung: **29.04.2020**
(21) Anmeldenummer: 17754617.3
(22) Anmeldetag: 26.07.2017
(51) Int. Cl.: F01N 13/10, F01N 13/18, F16B 35/00, F16B 39/26

(54) **BEFESTIGUNGSMUTTER FÜR ABGASKRÜMMER SOWIE VERBRENNUNGSMOTOR**
MOUNTING NUT FOR EXHAUST MANIFOLD AND INTERNAL COMBUSTION ENGINE
ÉCROU DE FIXATION POUR COLLECTEUR D'ÉCHAPPEMENT ET MOTEUR À COMBUSTION INTERNE

(30) Priorität: 11.08.2016 DE 102016114891
(43) Veröffentlichungstag der Anmeldung: 19.06.2019
(73) Patentinhaber: Flaig, Hartmut, 78554 Aldingen (DE)
(72) Erfinder: Flaig, Hartmut, 78554 Aldingen (DE)
(74) Vertreter: Patentanwälte Behrmann Wagner PartG mbB
(86) Internationale Anmeldenummer: PCT/EP2017/068908
(87) Internationale Veröffentlichungsnummer: WO 2018/028992

(56) Entgegenhaltungen:
- WO-A1-89/09344
- WO-A1-2013/004686
- DE-A1-102009 023 721
- DE-U1- 20 301 402
- DE-U1- 20 301 402
- DE-U1- 29 817 010
- DE-U1- 29 817 010
- US-A1- 2007 098 524

## Beschreibung

Die Erfindung betrifft eine Befestigungsmutter gemäß dem Oberbegriff des Anspruchs1, zum Festlegen eines Abgaskrümmers an einem Zylinderkopf eines Verbrennungsmotors durch Verschrauben (der Befestigungsmutter) mit einem an dem Zylinderkopf gehaltenen und eine Durchgangsöffnung im Abgaskrümmer durchsetzenden Außengewindebolzen, wobei die Befestigungsmutter einen Innengewindeabschnitt zum Verschrauben mit dem Außengewindebolzen sowie vorzugsweise Bremsmomentmittel zum Erhöhen des Lösemomentes umfasst, weiter umfassend eine, ein vorderes Befestigungsmutterende definierende, erste Abstützfläche zum mittelbaren oder unmittelbaren axialen Abstützen am Zylinderkopf und/oder einer auf dem Zylinderkopf aufliegenden Dichtung und umfassend eine zweite Abstützfläche zum mittelbaren oder unmittelbaren axialen Abstützen am Abgaskrümmer, wobei die erste Abstützfläche, insbesondere stirnseitig, an einem Abstützabschnitt der Befestigungsmutter zum Durchsetzen der Durchgangsöffnung (im Abgaskrümmer) angeordnet und die zweite Abstützfläche an einem radial vorstehenden, in axialer Richtung elastisch vorspannbaren Federabschnitt mit Axial- und Radialabstand zu der ersten Abstützfläche ausgebildet ist.

Bei bekannten Verbrennungsmotoren ist der Abgaskrümmer mithilfe von mehreren Gewindebolzen/Befestigungsmutter-Kombinationen am Zylinderkopf fixiert, wobei die Gewindebolzen jeweils eine Durchgangsöffnung im Abgaskrümmer durchsetzen und wobei die mit den Gewindebolzen verschraubten Muttern den Abgaskrümmer zwischen einer unteren Stirnseite der Mutter und dem Zylinderkopf verklemmen. In der Praxis besteht das Problem, dass der Krümmer aufgrund der im Betrieb auftretenden Temperaturschwankungen, insbesondere bei der Startphase eines Verbrennungsmotors, zum Schieben neigt, d.h. der Krümmer bewegt sich parallel zur Zylinderkopfoberfläche, wobei über das Krümmerblech und/oder über die sich ausschließlich auf dem Abgaskrümmer abstützenden Muttern ein Biegemoment auf die Gewindebolzen ausgeübt wird. Diese Biegemomente bringen erhebliche Nachteile mit sich. Im besten Fall werden die Gewindebolzen lediglich plastisch verbogen - es kann jedoch auch zu einem Abreißen der Gewindebolzen und damit zu einem zumindest partiellen Ablösen des Abgaskrümmers kommen. Auch ist es möglich, dass sich die Muttern aufgrund der Vielzahl von Lastwechseln von den Gewindebolzen lösen und dadurch durch den Abgaskrümmer freigeben.

Aus der DE 199 20 822 A1 ist ein Verbrennungsmotor bekannt, bei welchem der Krümmer am Zylinderkopf mittels einer Mutter fixiert ist, die sich axial auf einer Distanzbuchse abstützt, die eine Durchgangsöffnung im Abgaskrümmer durchsetzt und sich axial unmittelbar am Abgaskrümmer abstützt. Gemäß eines Ausführungsbeispiels der Druckschrift kann die Distanzhülse auch einstückig mit der Mutter ausgebildet sein, wobei sich in diesem Fall die Mutter über den Distanzhülsenabschnitt unmittelbar am Zylinderkopf abstützt. Gleichzeitig liegt die Mutter mit einem starren Flansch fest auf der Außenseite des Abgaskrümmers auf, wobei es auch bei der bekannten Anordnung aufgrund des in Betrieb auftretenden Biegemoments zu einer plastischen Verformung des Gewindebolzens und zu einem Abreißen der Mutter kommen kann.

Zum weiteren Stand der Technik werden die JP 2004-339947 A, die DE 198 23 475 A1, die DE 100 49 117 A1, die DE 82 19 329 A, die DE 41 26 744 A1, die DE 198 07 312 A1, die DE 199 60 619 A1, die FR 2 902 457 A3 sowie die JP 8-246868 A genannt.

Vorstehend erläuterte Probleme wurden mit einer gegenüber den bis dato bekannten Befestigungsmuttern verbesserten, in der EP 2 729 680 B1 beschriebenen Befestigungsmutter der Anmelderin gelöst. Die bekannte Befestigungsmutter der Anmelderin ist einteilig ausgebildet und umfasst neben Bremsmomentmitteln zum Erhöhen des Lösemomentes einen axial elastisch vorspannbaren Federabschnitt, an welchem eine (zweite) Abstützfläche ausgebildet ist, mit der sich der vorgespannte Federabschnitt mittelbar oder unmittelbar auf dem Abgaskrümmer (Abgaskrümmerblech) abstützt. Durch das Vorsehen des Federabschnittes wird dem Abgaskrümmer ermöglicht, sich relativ zu der zweiten Abstützfläche zu verschieben, wodurch nicht die gesamte Verschiebekraft von der Mutter aufgenommen werden muss. Dies führt dann zu einer geringeren Belastung des Außengewindebolzens, so dass dessen Verformung oder gar ein Abreißen sicher verhindert wird. Als nachteilig bei der bekannten Befestigungsmutter wird empfunden, dass diese im Kaltfließpressverfahren aufgrund der komplexen Formgebung nur schwierig fertigbar ist. Darüber hinaus ist die Federkraft des Federabschnitts nicht skalierbar.

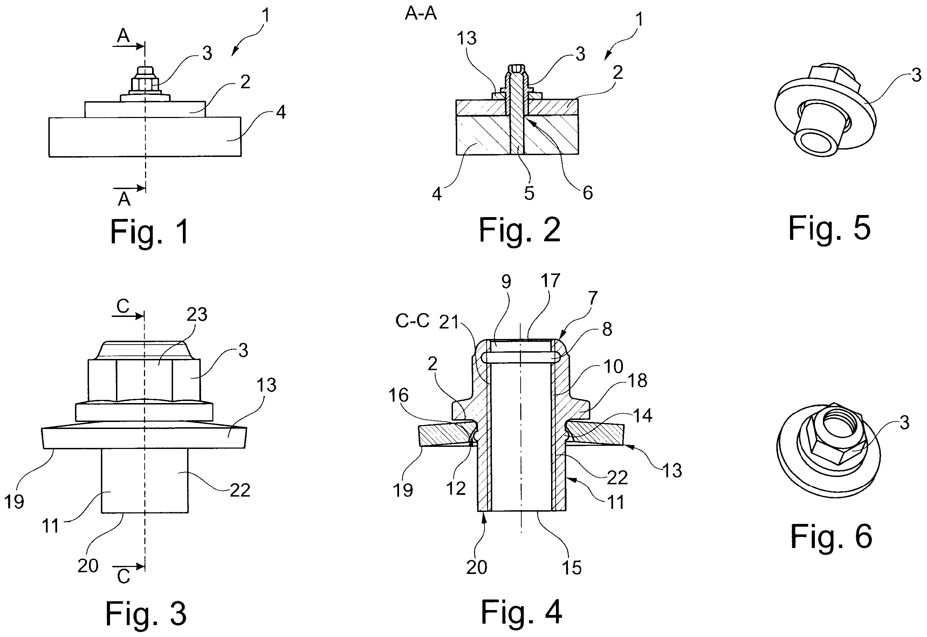

Aus der DE 298 17 010 U1 ist zudem bereits ein Verschraubungsteil bekannt, welches einen Mutterkörper aufweist, der mit einer ersten Abstützfläche ggf. an einem Zylinderkopf und/oder einer auf dem Zylinderkopf aufliegenden Dichtung mittelbar oder unmittelbar abgestützt sein könnte. Die Ausführungsform der Fig. 2 zeigt eine mehrteilig ausgebildete Mutter, bei der die beiden Bestandteile des Mutterkörpers durch eine Hintergreifung miteinander verbunden sind. Gemäß der DE 298 17 010 U1 is gerade eine Beweglichkeit zwischen den beiden Teilen des Mutterköpers bzw. zwischen der Mutter 1 und dem Hals 3 gewollt.

Ausgehend von dem vorgenannten Stand der Technik liegt der Erfindung daher die Aufgabe zugrunde, eine verbesserte, einfach fertigbare Befestigungsmutter zum Festlegen eines Abgaskrümmern an einem Zylinderkopf eines Verbrennungsmotors anzugeben, die aufgrund ihrer Beschaffenheit zudem die Möglichkeit eröffnet, durch einfache Maßnahmen die Federkraft des Federabschnitts zu skalieren. Ferner besteht die Aufgabe darin, einen Verbrennungsmotor mit entsprechend verbesserter Befestigungsmutter anzugeben.

Diese Aufgabe wird hinsichtlich der Befestigungsmutter mit den Merkmalen des Anspruchs 1 gelöst.

Hinsichtlich des Verbrennungsmotors wird die Aufgabe mit den Merkmalen des Anspruchs 16 gelöst.

Erfindungsgemäß ist der der Innengewindeabschnitt axial verkürzt ausgebildet und befindet sich in einem von der ersten Abstützfläche abgewandten axialen Endabschnitt des Mutterkörpers, wobei der gesamte Abstützabschnitt innengewindefrei ausgebildet ist und der Innendurchmesser des Abstützabschnittes verglichen mit dem Innendurchmesser des Innengewindeabschnittes größer ausgeführt ist, so dass ein Axialabschnitt, insbesondere von über 50%, des Mutterkörpers nicht mit dem Außengewindebolzen verschraubbar oder verschraubt ist.

Vorteilhafte Ausgestaltungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, im Gegensatz zum Stand der Technik den Federabschnitt nicht einteilig mit dem den Innengewindeabschnitt und die erste Abstützfläche ausbildenden Mutterabschnitt bzw. Mutterkörper zu gestalten, sondern als Federteil ein separates Bauteil, insbesondere in Form einer Tellerfeder vorzusehen und dies an einem den Innengewindeabschnitt und den Abstützabschnitt mit seiner ersten Abstützfläche ausbildenden Mutterkörper, an dem bevorzugt auch die fakultativen Befestigungsmittel monolithisch vorgesehen sind, unverlierbar zu halten bzw. festzulegen. Dies eröffnet die Möglichkeit, einer separaten Fertigung des Federabschnitts und des Mutterkörpers, insbesondere jeweils durch Kaltfließpressen, ohne dass hierbei Nachteile bei der Montage des Abgaskrümmers, insbesondere des Abgaskrümmerblechs am Zylinderkopf resultieren würden, da das Federteil bereits unverlierbar am Mutterkörper über entsprechende, bevorzugt zum formschlüssigen Fixieren des Federteils am Mutterkörper ausgebildete Sicherungsmittel festgelegt ist. Darüber hinaus ist die Federkraft des Federabschnitts der Befestigungsmutter auf einfache Weise skalierbar, indem mit einem Mutterkörper bzw. mit gleichen Mutterkörpern unterschiedlich dimensionierte, insbesondere eine voneinander unterschiedliche Federkonstante aufweisende Federteile verwendet werden können. Auch ist es möglich zu dem die zweite Abstützfläche ausbildenden Federteil, insbesondere auf der von der zweiten Abstützfläche abgewandten Seite des Federteils mindestens ein weiteres (axial elastisch verspannbares) Federteil am Mutterkörper, insbesondere unverlierbar anzuordnen und hierdurch die Federsteifigkeit zu erhöhen. Die Federteile können dabei die gleiche oder unterschiedliche Federkonstante aufweisen. Das mindestens eine Federteil ist bevorzugt als Tellerfeder ausgebildet und weist eine, vorzugsweise zentrische, Durchgangsöffnung auf, die von dem Mutterkörper, bevorzugt von deren Abstützabschnitt axial durchsäht ist.

Neben den vorerwähnten Vorteilen einer vereinfachten Fertigbarkeit und einer einfacheren Skalierbarkeit der Federkraft bzw. -Steifigkeit wird auch bei der erfindungsgemäßen Befestigungsmutter gewährleistet, dass der Abgaskrümmer, insbesondere ein Abgaskrümmerblech, auf dem sich die Befestigungsmutter mit dem Federteil, genauer der an dieser realisierenden zweiten Abstützfläche, abstützt, schieben kann, d.h. sich relativ zu der Befestigungsmutter bzw. von deren Federteil bewegen kann, ohne dass es hierdurch zu einer unzulässigen Kraftbelastung der Befestigungsmutter und damit des von der Befestigungsmutter separaten, im Zylinderkopf festgelegten Außengewindebolzen kommt. Das, insbesondere als Tellerfeder ausgebildete Federteil übernimmt nämlich neben der Kraftbeaufschlagung des Abgaskrümmers durch seine axiale Vorspannung, die aus dem Aufschrauben der Befestigungsmutter auf den Außengewindebolzen und das axiale Verstellen der Befestigungsmutter gegen den Abgaskrümmer resultiert, die Funktion einer Gleitscheibe (Unterlegscheibe), die trotz der auf die elastische Vorspannung (Auslenkung) zurückzuführenden Anpresskraftbelastung auf den Abgaskrümmer ein Verschieben des Abgaskrümmers bei Temperaturschwankungen ermöglicht. Darüber hinaus hat das Vorsehen des von dem Mutterkörper separaten Federteils den Vorteil, dass etwaige Dickentoleranzen des Abgaskrümmers und einer fakultativen, bevorzugt zwischen dem Krümmer und dem Zylinderkopf aufgenommenen Dichtung, insbesondere einer metallischen Dichtung, ganz besonders bevorzugt einer Flachdichtung auf einfache Weise ausgeglichen werden können. Bevorzugt ist das Federteil oder sind in Weiterbildung der Erfindung die, insbesondere entlang der Axialerstreckung des Mutterkörpers übereinander angeordneten Federteile derart ausgelegt und relativ zu der ersten Abstützfläche angeordnet, dass die Anpresskraft, mit welcher sich die Befestigungsmutter am Zylinderkopf oder der vorerwähnten, darauf angeordneten Dichtung in axialer Richtung abstützt, größer ist als die Federkraft, mit welcher sich die zweite Abstützfläche, also das Federteil den Abgaskrümmer in Richtung Zylinderkopf beaufschlagt.

Im Hinblick auf die konkrete Ausgestaltung der Sicherungsmittel gibt es unterschiedliche Möglichkeiten. Es ist grundsätzlich möglich, diese als von dem Federteil und/oder dem Mutterkörper separates Bauteil auszugestalten. Ganz besonders bevorzugt ist jedoch eine Ausführungsvariante, bei der die Sicherungsmittel monolithisch, d.h. einteilig mit dem Mutterkörper ausgestaltet sind, insbesondere in Form mindestens eines radialen Vorsprungs, ganz besonders bevorzugt in Form von zwei in axialer Richtung beabstandeten radialen Vorsprüngen, zwischen denen das mindestens eine Federteil abschnittsweise aufgenommen ist, um das Federteil somit an der Mutter in axialer Richtung zu sichern. Wie später noch erläutert werden wird, ist es alternativ auch möglich, die Sicherungsmittel mittels einer, insbesondere hülsen- und/oder klammerförmigen Gleitscheibe (Gleitelement) zu bilden, die hierzu bevorzugt das mindestens eine Federteil und ein hinteres axiales Widerlager zum mittelbaren oder unmittelbaren Abstützen des mindestens einen Federteils übergreift bzw. umklammert.

Wie erwähnt, umfasst die nach dem Konzept der Erfindung ausgebildete Befestigungsmutter gemäß einer vorteilhaften Weitbildung Bremsmomentmittel, die bevorzugt monolithisch am Mutterkörper realisiert sind. Diese verhindern ein selbsttätiges Lösen der Mutter, insbesondere indem sie dafür Sorge tragen, dass die Reibung zwischen Mutter und dem Gewindebolzen erhöht wird. Anders ausgedrückt wird das Lösemoment erhöht, welches auf der Mutter aufgebracht werden muss, damit die Mutter entgegen der Einschraubrichtung verdreht wird. Die fakultativen Bremsmomentmittel können, wie später noch erläutert werden wird, bevorzugt ausgestaltet sein, wie in der WO 2007/076968 A1 oder der EP 2 729 680 B1 offenbart. Die Bremsmomentmittel tragen dafür Sorge, dass sich die Mutter trotz eines möglichen Schiebens des Abgaskrümmers nicht löst. Zusätzlich oder alternativ zu Bremsmomentmitteln an der Befestigungsmutter können Bremsmittel am Außengewindebolzen des Verbrennungsmotors vorgesehen werden. Anstelle der in der vorgenannten Druckschrift beschriebenen Ausführungsform von Bremsmomentmitteln können auch alternative Realisierungsformen, beispielsweise in Form einer Gewindegang und/oder -flanken Deformation, etc. als Bremsmomentmittel vorgesehen werden.

Die erfindungsgemäße Befestigungsmutter zeichnet sich, wie erwähnt, durch einen axialen, insbesondere stirnseitig die erste Abstützfläche ausbildenden Abstützabschnitt aus, wobei der Abstützabschnitt die zweite Abstützfläche des Federteils in axialer Richtung (d.h. in eine axiale Aufschraubrichtung) überragt, insbesondere derart, dass die erste Abstützfläche in axialer Richtung von der zweiten Abstützfläche um mehrere Millimeter, insbesondere um mindestens 5mm, ganz besonders bevorzugt um mindestens 10mm beabstandet ist, ganz besonders bevorzugt im entspannten Zustand des Federteils. Ganz besonders bevorzugt ist der vorgenannte Axialabstand, insbesondere im entspannten Zustand des Federteils, aus einem Wertebereich zwischen 3mm und 25mm, insbesondere zwischen 5mm und 20mm, noch weiter bevorzugt zwischen 5mm und 15mm gewählt.

Wie bereits angedeutet ist die Federkraft der Befestigungsmutter, insbesondere bei Einsatz identischer Mutterkörper, auf einfache Weise skalierbar, indem zusätzlich zu dem die zweite Abstützfläche aufweisenden, bevorzugt als Tellerfeder ausgebildeten Federteil, insbesondere axial benachbart zu dem Federteil, ganz besonders bevorzugt auf einer von der ersten Abstützfläche abgewandten (Axial-)Seite des Federteils mindestens ein, bevorzugt ausschließlich ein, weiteres (von dem Mutterkörper ebenfalls separates) zweites Federteil an dem Mutterkörper über die Sicherungsmittel unverlierbar festgelegt ist, wobei bevorzugt die Federteile in Reihe angeordnet sind. Durch das Vorsehen mehrerer Federteile kann die Federsteifigkeit der resultierenden Gesamtfeder beeinflusst bzw. variiert werden. Insbesondere bei Anordnung der Federteile in Reihe kann die Nachgiebigkeit des Federpakets durch das Vorsehen mehrerer Federn und damit der (Gesamt-)Federweg erhöht werden, insbesondere wenn die Federteile in einander entgegengesetzte Axial-Richtungen geneigt und/oder gewölbt sind. Für den Fall, dass die Federn in die gleiche Axial-Richtung geneigt und/oder gewölbt sind, insbesondere in Richtung der ersten Abstützfläche kann die Federsteifigkeit der Gesamtfeder durch das Vorsehen mehrerer Federteile auch erhöht werden, insbesondere wenn die Federteile Form kongruent ausgebildet sind und sich, insbesondere großflächig aneinander abstützen. Für den Fall des Vorsehens eines zweiten Federteils stützt sich bevorzugt nicht das erste Federteil mit einer von der zweiten Abstützfläche abgewandten Axialseite an einem radial vorstehenden, hinteren Widerlagerabschnitt des Mutterkörpers ab, sondern das zweite Federteil, während sich das erste Federteil mittelbar oder unmittelbar axial am zweiten Federteil abstützt.

Wie bereits erläutert ist es besonders zweckmäßig, wenn das mindestens eine Federteil als Tellerfeder ausgebildet ist, die bevorzugt konisch ausgebildet ist oder gewölbt. Dabei ist es besonders bevorzugt, wenn die Tellerfeder so ausgestaltet ist, dass durch die im Längsschnitt entlang der Axialerstreckung der Befestigungsmutter die zweite Abstützfläche axial weniger weit von der ersten Abstützfläche beabstandet ist als ein, insbesondere ringförmiger, ganz besonders bevorzugt innerer Kontaktbereich des Federteils zum Mutterkörper. Bevorzugt durchsetzt der Mutterkörper eine entsprechende Durchgangsöffnung des dann insbesondere ringförmigen, bevorzugt umfangsgeschlossenen, Federteils in axialer Richtung.

Für den Fall des Vorsehens von mindestens zwei, bevorzugt ausschließlich zwei, axial benachbarten Federteilen gibt es im Hinblick auf deren konkrete Ausbildung und Orientierung unterschiedliche Möglichkeiten. So ist es bevorzugt, beide Federteile jeweils als Tellerfeder auszubilden. Beide, insbesondere als Tellerfedern ausgebildete Federteile können dabei in die gleiche Axial-Richtung geneigt bzw. gewölbt ausgebildet sein, insbesondere in Richtung der ersten Abstützfläche. Auch ist es alternativ denkbar, die beiden Federteile ineinander entgegengesetzte Richtungen zu neigen, und/oder zu wölben, insbesondere voneinander weg, derart, dass die radial äußeren Randbereiche der Federteile ineinander entgegengesetzte Axialrichtungen weisen, wobei sich in diesem Fall das zweite, weiter von der ersten Abstützfläche beabstandete Federteil, bevorzugt, jedoch nicht zwingend mit einem radial äußeren Randbereich am radial vorstehenden Widerlagerabschnitt des Mutterkörpers abstützt. Für den Fall der gleichen Orientierung bzw. Wölbung/Neigung der Federteile ist es bevorzugt, wenn sich das zweite, weiter von der ersten Abstützfläche entfernte Federteil mit einem radial inneren bzw. zentrischen Randbereich axial an dem Widerlagerabschnitt des Mutterkörpers abstützt.

Wie eingangs ausgeführt ist es besonders bevorzugt, wenn die Befestigungsmutter selbst Bremsmomentmittel aufweist, die durch Zusammenwirken mit dem Außengewinde des Außengewindebolzens ein Lösemoment erhöhen und somit ein selbsttätiges Lösen der Befestigungsmutter vom Außengewindebolzen verhindern. Zusätzlich oder alternativ zu befestigungsmutterseitigen Bremsmomentmitteln können externe Bremsmomentmittel, beispielsweise unmittelbar an dem dem Verbrennungsmotor zugeordneten bzw. zuordnenbaren Außengewindebolzen vorgesehen werden.

Besonders zweckmäßig ist es, wenn die Befestigungsmutter Antriebsmittel, beispielsweise in Form mindestens eines Schlüsselflächenpaares oder einer stirnseitigen Mehrkant- oder Mehrrundvertiefung, wie einem Inbusantrieb oder einem Torxantrieb aufweist. Bevorzugt sind solche Antriebsmittel monolithisch mit dem Mutterkörper ausgebildet.

Besonders zweckmäßig ist eine Ausführungsvariante der Befestigungsmutter, bei der der Mutterkörper als Kaltfließpressteile aus Metall und/oder das mindestens eine Federteil als Kaltumformteil, insbesondere Stanzteil, aus Metall ausgebildet sind/ist. Ganz besonders bevorzugt ist eine Ausführungsform der Befestigungsmutter, bei der diese zusätzlich zu dem Mutterkörper und dem mindestens einen Federteil, oder dem ausschließlich einen Federteil, oder alternativ den mehreren Federteilen, keine zusätzlichen Bauteile oder zusätzlich noch eine später noch zu erläuternde Gleitscheibe umfasst.

Im Hinblick auf die konkrete Ausgestaltungsform der Sicherungsmittel gibt es unterschiedliche Möglichkeiten. Besonders zweckmäßig ist es, wenn sich das Federteil axial in Richtung vorderem Ende der Befestigungsmutter an einem vorderen, axialen (in radialer Richtung nach außen vorstehenden, bevorzugt zum formschlüssigen Sichern des Federteils am Mutterkörper ausgebildeten) Widerlagerabschnitt abstützt, der ganz besonders bevorzugt als Ringwulst am Mutterkörper ausgebildet und ganz besonders bevorzugt monolithisch mit diesem realisiert ist. Ein solcher axialer vorderer Widerlagerabschnitt kann beispielsweise durch Verstemmen und ein dadurch resultierendes Umformen des Mutterkörpers realisiert werden, insbesondere nach einem Aufschieben des Federteils auf den davon separaten Mutterkörper.

Dabei hat es sich als besonders zweckmäßig erwiesen, wenn an dem, insbesondere ringförmigen Federteil eine Innenkonusfläche ausgebildet ist, die sich in einer Axialrichtung von der ersten Abstützfläche weg, d.h. in Richtung hinterem Befestigungsmutterende in radialer Richtung verjüngt. Über eine solche Innenkonusfläche kann sich das Federteil an dem vorerwähnten vorderen axialen Widerlagerabschnitt abstützen.

Ganz besonders bevorzugt ist es, wenn sich das Federteil mit seiner von der zweiten Abstützfläche abgewandten (Axial-)Seite axial an einem monolithisch am Mutterkörper ausgebildeten hinteren, axialen Widerlagerabschnitt abstützt, der ganz besonders bevorzugt als Umfangsbund am Mutterkörper ausgebildet ist. Ganz besonders bevorzugt ist dieser hintere Widerlagerabschnitt, insbesondere Umfangsbund, so ausgebildet und angeordnet, dass er eine maximale Vorspannung des Federteils begrenzt, indem sich das Federteil mit zunehmender Vorspannung weiter bzw, zunehmend an den axialen hinteren Widerlagerabschnitt anlegt. Ganz besonders bevorzugt ist eine Ausführungsform, bei der zusätzlich zu dem gerade erläuterten hinteren Widerlagerabschnitt der davor erläuterte vordere Widerlagerabschnitt, insbesondere in Form eines Ringwulstes, vorgesehen ist, so dass das Federteil sandwichartig zwischen den axialen Widerlagerabschnitt aufgenommen ist und in radialer Richtung zumindest den der ersten Abstützfläche näheren axialen vorderen Widerlagerabschnitt überragt. Wie bereits erläutert stützt sich für den Fall des Vorsehens eines weiteren bzw. zweiten Federteils nicht das die zweite Abstützfläche ausbildende Federteil an dem vorgenannten Widerlagerabschnitt ab, sondern das zweite Federteil, wobei sich das erste Federteil mittelbar oder unmittelbar am zweiten Federteil abstützt.

Besonders zweckmäßig ist es, wenn eine dem axialen hinteren Widerlagerabschnitt zugewandte (hintere) Stirnseite des ersten oder falls vorgesehen des zweiten Federteils mit einer dieser zugewandten vorderen Seite des hinteren Widerlagerabschnitts, insbesondere des Umfangsbundes, einen Winkel einschließt, der sich bei zunehmender elastischer Vorspannung des Federteils beim Verdrehen der Befestigungsmutter auf dem Außengewindebolzen in Richtung Abgaskrümmer verkleinert.

Im Hinblick auf die Anordnung des Innengewindeabschnittes gibt es unterschiedliche Möglichkeiten. So kann der Innengewindeabschnitt entgegen der Lehre der EP 2 729 680 B1 auch zumindest abschnittsweise am Innenumfang des in einem axialen vorderen Endbereich des Mutterkörpers vorgesehenen axialen Abstützabschnitts ausgebildet sein und sich dort bevorzugt bis zum axial vorderen Ende des Mutterkörpers benachbart zur ersten Abstützfläche erstrecken. Bevorzugt ist der Innengewindeabschnitt auch in der axialen Verlängerung des Abstützabschnittes des Mutterkörpers nach hinten vorgesehen. Ganz besonders bevorzugt ist eine Ausführungsform der Befestigungsmutter, bei der der Innengewindeabschnitt, ggf. unterbrochen durch eine Innenumfangsnut zur Realisierung der Bremsmomentmittel, axial durchgängig am Innenumfang einer die Befestigungsmutter durchsetzenden Durchgangsöffnung ausgebildet ist. Bei einer alternativen Ausführungsvariante ist der Abstützabschnitt an seinem Innenumfang zumindest abschnittsweise innengewindefrei und/oder der Innenumfang des Abstützabschnitts ist zumindest abschnittsweise in radialer Richtung beabstandet von einem axial benachbarten Innengewindeabschnitt des Mutterkörpers, um somit zu gewährleisten, dass der Abstützabschnitt, genauer dessen Innenumfang im montierten Zustand radial beabstandet ist von dem Außengewindebolzen, um somit einen möglichst großen Abstützhebel zu realisieren. Der Innengewindeabschnitt befindet sich dann axial benachbart zum Abstützabschnitt in einem hinteren Mutterkörperabschnitt.

Wie erwähnt ist es besonders bevorzugt, wenn Bremsmomentmittel unmittelbar am Mutterkörper ausgebildet sind, wobei es weiter bevorzugt ist, wenn die Bremsmomentmittel, vorzugsweise ausschließlich, aufgrund elastischer Verformung oder einer dadurch verursachten Reibungserhöhung das Löse- bzw. Haltemoment erhöhen. Beispielsweise kann dies erreicht werden, indem der Innengewindeabschnitt unterbrochen ist von einer inneren Ringnut, so dass zwei axial beabstandete Innengewindebereiche resultieren, die elastisch relativ zueinander verstellbar sind und die Innengewinde der Innengewindebereiche axial und/oder in Umfangsrichtung versetzt angeordnet sind, um einen Steigungssprung zu realisieren, aus dem das Bremsmoment beim Verschrauben mit dem Außengewindebolzen resultiert. Ganz besonders bevorzugt wird die Bremsmomentwirkung wie in der WO 2007/076968 A1 offenbart erzielt, deren Offenbarungsgehalt in die vorliegende Anmeldung im Hinblick auf eine vorteilhafte Ausbildung der Bremsmittel als mit einbezogen und beanspruchbar gelten soll. Zusätzlich oder alternativ zu Bremsmomentmitteln an der Mutter können, wie bereits erläutert, Bremsmomentmittel am Außengewindebolzen vorgesehen werden, beispielsweise durch eine Deformierung des Außengewindes des Außengewindebolzens.

Wie erläutert ist es möglich und bevorzugt, wenn sich das Federteil mit seiner zweiten Abstützfläche unmittelbar am Krümmerblech abstützt. Alternativ ist auch eine mittelbare Abstützung möglich, insbesondere über eine Gleitscheibe der Befestigungsmutter, die axial verschieblich am Mutterkörper angeordnet ist, in einem Bereich zwischen der ersten und der zweiten Abstützfläche, wobei sich das erste Federteil der zweiten Abstützfläche axial an der Gleitscheibe abstützt. Die Gleitscheibe ist dabei unverlierbar am Mutterkörper gesichert, beispielsweise wie später noch erläutert werden wird durch sich selbst durch entsprechende Formgebung, insbesondere Umklammern des mindestens einen Federteils und eines hinteren Widerlagerabschnitts des Mutterkörpers oder alternativ durch axiales Anschlagen bzw. Anliegen an einem entsprechenden vorderen Widerlager, bevorzugt einem Radialfortsatz, insbesondere Umfangswulst, ganz besonders bevorzugt Verstemmung des Mutterkörpers. Die Gleitscheibe dient dabei zum unmittelbaren Abstützen der Befestigungsmutter am Abgaskrümmer, wobei selbstverständlich, falls aus anderen Gründen notwendig, zusätzlich oder alternativ zur Gleitscheibe oberhalb des Abgaskrümmers noch ein weiteres, insbesondere flächenförmiges von der Befestigungsmutter separates Element, insbesondere eine Scheibe angeordnet sein kann. In diesem Fall stützt sich dann die Befestigungsmutter über die Gleitscheibe mittelbar am Abgaskrümmer ab. Die Ausführungsform mit Gleitscheibe ist sowohl bei Realisierung eines einzigen Federteils oder alternativ auch bei Realisierung mehrerer Federteile möglich.

Ganz besonders bevorzugt ist eine Ausführungsform, bei der die Gleitscheibe hülsen- und/oder klammerförmig ausgebildet ist und das mindestens eine Federteil radial außen umschließt, d.h. einkapseln. Hierzu erstreckt sich die Gleitscheibe mit einem Umfangswandabschnitt radial außen bzw. radial benachbart zu dem Federteil bzw. den Federteilen in axialer Richtung, wobei es ganz besonders bevorzugt ist, wenn die Gleitscheibe mit ihrer Umfangswand auch das vorerwähnte Widerlager radial außen umschließt, an dem sich das erste oder zweite oder ein weiteres Federteil axial abstützt. Durch dieses Einschließen des mindestens einen Federteils und ggf. des hinteren Widerlagers lässt sich die Montage der Befestigungsmutter weiter vereinfachen.

Wie bereits erwähnt, ist es grundsätzlich möglich, dass die Gleitscheibe an einem vorderen Widerlager, insbesondere einem radial vorstehenden Wulst bzw. Abschnitt, insbesondere einer Verstemmung am Mutterkörper, insbesondere am Abstützabschnitt gehalten bzw. axial gesichert ist. Zusätzlich oder alternativ kann die Gleitscheibe, insbesondere bei einer hülsen- und/oder klammerförmigen Ausgestaltung selbst die Sicherungsmittel für das mindestens eine Federteil bilden, insbesondere in dem die Gleitscheibe bzw. das Gleitelement das mindestens eine Federteil und den Widerlagerabschnitt umklammert und sich somit am Widerlagerabschnitt festhält bzw. das mindestens eine Federteil an diesem axial sichert.

Unabhängig von der konkreten Ausgestaltung der Gleitscheibe bzw. des Gleitelementes ist diese bei den wirkenden Kräften nicht oder zumindest weniger stark elastisch deformierbar als das mindestens eine Federteil. Die Gleitscheibe bleibt im Wesentlich starr bzw. undeformiert, um die Federkräfte des mindestens einen Federteils aufnehmen zu können.

Im Rahmen des die Befestigungsmutter umfassenden Verbrennungsmotors ist es bevorzugt, wenn der Abstützabschnitt des Mutterkörpers im montierten Zustand mit Radialspiel zum Abgaskrümmer, insbesondere einem Abgaskrümmerblech und/oder mit Radialspiel zu dem Rand einer von dem Außengewindebolzen durchsetzten Öffnung im Zylinderkopf angeordnet ist, so dass nicht automatisch jedes Schieben des Abgaskrümmers zu einer unmittelbaren Krafteinwirkung auf den Mutterkörper durch Abstützen des Abgaskrümmers an diesem führt. Bevorzugt ist das Radialspiel so ausgelegt, dass im Betrieb eine seitliche Anlage des Abgaskrümmers am Abstützabschnitt vermieden wird. Da der Abstützabschnitt das erste Federteil in axialer Richtung überragt, kann bzw. wird die Befestigungsmutter auf Block angezogen, sodass sie sich axial mittelbar oder unmittelbar am Zylinderkopf abstützt. Dabei ist der Abstand zwischen der ersten Abstützfläche und der zweiten Abstützfläche so gewählt, dass während dieses Festziehvorgangs der Befestigungsmutter auf Block das erste Federteil und, falls vorhanden, ein fakultatives zweites Federteil vorgespannt wird, wobei sich das erste Federteil entweder unmittelbar mit seiner zweiten Abstützfläche am Krümmerblech oder alternativ mittelbar am Krümmerblech abstützt, ganz bevorzugt über ein Sicherungselement bzw. eine Sicherungsscheibe der Befestigungsmutter, die bevorzugt unverlierbar, mittelbar oder unmittelbar am Mutterkörper der Befestigungsmutter gehalten ist.

Die erfindungsgemäße Ausgestaltung der Befestigungsmutter mit einem Mutterkörper und mindestens einem davon separaten Federteil ermöglicht es innerhalb der Befestigungsmutter, dem Stehbolzen und dem Zylinderkopf eine größere Vorspannkraft zu realisieren als zwischen der Befestigungsmutter, genauer dem mindestens einen Federteil, dem Abgaskrümmer und dem Zylinderkopf. Dies ist auf die elastische Verformbarkeit des mindestens einen Federteils zurückzuführen. Durch die geringere Vorspannkraft auf den Abgaskrümmer über das Federteil erhält der Abgaskrümmer die Möglichkeit unter dem Federteil zu schieben, während der Mutterkörper auf Block angezogen ist. Durch die mehrteilige Ausbildung der Befestigungsmutter im Sinne der Erfindung ist diese Federkraft und damit die Vorspannung zwischen Befestigungsmutter bzw. mindestens einem Federteil, Abgaskrümmer und Zylinderkopf auf einfache Weise skalierbar.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine ausschnittsweise Darstellung eines nicht von der Erfindung umfassten Verbrennungsmotors,
- Fig. 2:: eine Schnittdarstellung entlang der Schnittlinie A - A gemäß Fig. 1,
- Fig. 3 bis Fig. 6:: unterschiedliche, teilweise geschnittene und teilweise perspektivische Ansichten einer nicht von der Erfindung umfassten, mehrteiligen, bei einem Verbrennungsmotor gemäß den Fig. 1 und 2 zum Einsatz kommenden Befestigungsmutter,
- Fig. 7 bis Fig. 12: ein alternatives nicht von der Erfindung umfasstes Ausführungsbeispiel, wobei die Fig. 7 und 8 die Anordnung der Befestigungsmutter am Verbrennungsmotor zeigen, ohne dass hier die konkreten (anderen) Details der Befestigungsmutter zu erkennen sind und in den Fig. 9 bis 12 die bevorzugte Ausführung der Befestigungsmutter mit zwei ineinander entgegengesetzte Axialrichtungen gewölbten, jeweils als Tellerfeder ausgebildeten Federteilen zeigt,
- Fig. 13 bis Fig. 18: ein weiteres alternatives nicht von der Erfindung umfasstes Ausführungsbeispiel, wo auch hier in den Fig. 13 und 14 die Verbrennungsmotorsituation dargestellt ist, ohne auf die Änderungen bzw. Details der konkreten Befestigungsmutter einzugehen, und in den Fig. 15 bis 18 die bevorzugte Ausführungsform der Befestigungsmutter mit zwei Federteilen gezeigt ist, die entgegen dem vorgenannten Ausführungsbeispiel in die gleiche Axialrichtung gewölbt sind, nämlich hin zur ersten Abstützfläche,

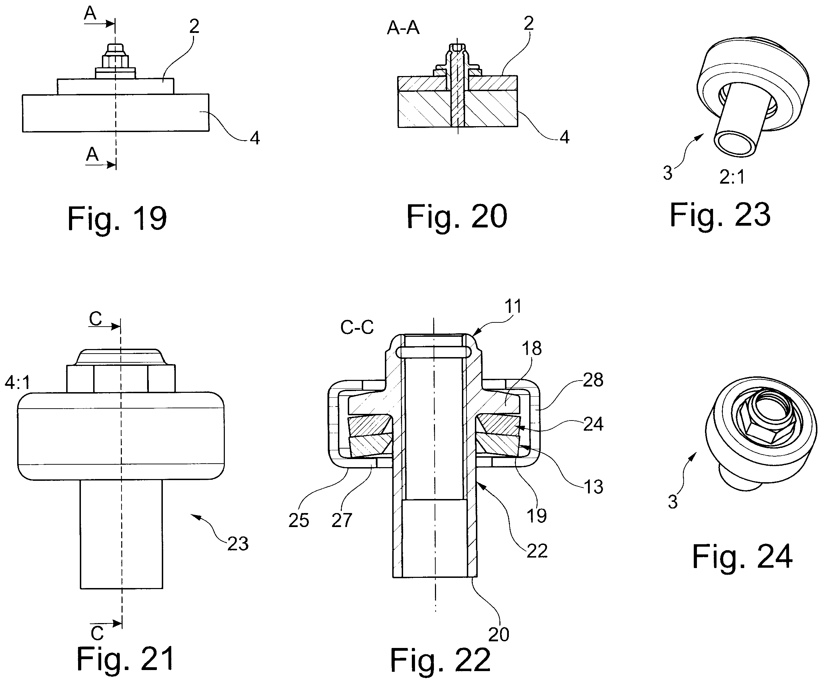

- Fig. 19 bis Fig. 24: ein weiteres alternatives nicht von der Erfindung umfasstes Ausführungsbeispiel, hier beispielhaft mit zwei in die gleiche Richtung gewölbten Federteilen, wobei alternativ auch nur ein Federteil oder in unterschiedliche Richtungen gewölbte Federteile oder mehr als zwei Federteile vorgesehen sein können), wobei zusätzlich zu den Federteilen eine hülsen- bzw. klammerförmige Gleitscheibe vorgesehen ist zum unmittelbaren Abstützen auf dem Krümmerblech, wobei die Gleitscheibe sowohl einen Widerlagerabschnitt als auch die Federteile umgreift bzw. umklammert und somit als Sicherungsmittel für die Federteile fungiert,
- Fig. 25 bis Fig. 30: ein weiteres alternatives nicht von der Erfindung umfasstes Ausführungsbeispiel einer Befestigungsmutter mit einer scheibenförmigen Gleitscheibe, die axial an einem als Radialwulst ausgebildeten vorderen Widerlager des Mutterkörpers gesichert ist.
- Fig. 31a bis Fig. 34b: die in den Fig. 1 bis 24 dargestellten Ausführungsvarianten mit erfindungsgemäß verkürztem Innengewindeabschnitt zur Verbesserung der Dehnbarkeit des Außengewindebolzens beim Verschrauben mit der Befestigungsmutter, wobei die jeweils mit a gekennzeichneten Figuren eine Längsschnittansicht entlang der Schnittlinie der jeweiligen Darstellung b zeigen, und
- Fig. 35a und Fig. 35b: nochmals aus Übersichtlichkeitsgründen die in den Fig. 25 bis 30 dargestellte Variante der erfindungsgemäßen Befestigungsmutter mit verkürztem Innengewindeabschnitt und zwei Federteilen, die derart
angeordnet sind, dass sich die Federsteifigkeit der Gesamtfeder erhöht.

In den Figuren sind gleiche Elemente und Elemente mit der gleichen Funktion mit den gleichen Bezugszeichen gekennzeichnet.

In den Fig. 1 und 2 ist ein Verbrennungsmotor 1 ausschnittsweise dargestellt. Der Verbrennungsmotor 1 umfasst einen Abgaskrümmer 2, der mit einer Befestigungsmutter 3 an einem Zylinderkopf 4 des Verbrennungsmotors 1 festgelegt und axial gegen den Zylinderkopf 4 kraftbeaufschlagt ist. Zu diesem Zweck ist die Befestigungsmutter 3 mit einem ein Außengewinde aufweisenden Außengewindebolzen 5 verschraubt, der im Zylinderkopf 4 verankert ist. Nicht gezeigt ist eine fakultative, bevorzugt zwischen Abgaskrümmer 2 und Zylinderkopf 4 angeordnete Flachdichtung.

Der Außengewindebolzen 5 durchsetzt eine Durchgangsöffnung 6 im Abgaskrümmer 2, genauer im Abgaskrümmerblech axial und überragt den Abgaskrümmer 2 in dieser Axialrichtung. Die Befestigungsmutter 3 ist als Sicherungsmutter ausgebildet und umfasst in einem vom Zylinderkopf 4 abgewandten Bereich in Fig. 4 gezeigte Bremsmomentmittel 7, die in dem gezeigten Ausführungsbeispiel wie in der WO 2007/076968 A1 beschrieben ausgebildet sind, so dass zur Vermeidung von Wiederholungen im Hinblick auf die konkrete Ausbildung der Bremsmomentmittel auf vorstehende Offenlegungsschrift verwiesen wird. Die Bremsmomentmittel 7 sind jedenfalls so ausgebildet, dass sie das Lösemoment zum Lösen der Befestigungsmutter 3 im Vergleich zu einer Ausführung ohne Bremsmomentmittel 7 erhöhen und damit die Befestigungsmutter 3 gegen Lösen, beispielsweise durch Vibration oder ein Verdrehen der Befestigungsmutter 3 durch ein Schieben des Abgaskrümmers 2 bei Erwärmung sichern.

Die Bremsmomentmittel 7 umfassen eine innere Ringnut 8, die zwei Innengewindebereiche 9, 10 axial voneinander beabstandet. Die Innengewindebereiche 9, 10 weisen einen Steigungssprung bzw. -versatz auf, was dazu führt, dass der in der Zeichnungsebene obere bzw. bezogen auf die Befestigungsmutter 3 hintere Innengewindebereich 9 (Austauschabschnitt), axial elastisch verstellt wird und somit die Reibung zum Außengewinde des Außengewindeabschnitts erhöht. Anstelle der gezeigten Ausführungsform der Bremsmomentmittel 7 können auch andere Realisierungsformen vom Bremsmomentmitteln 7 verwirklicht sein, beispielsweise in Form einer Gewindegang und/oder -flankendeformation.

Aus Fig. 4 ist zu erkennen, dass die Befestigungsmutter 3 erfindungsgemäß mehrteilig ausgebildet ist. Konkret umfasst diese einen zentrischen, einteiligen Mutterkörper 11, an dem die Bremsmomentmittel 7 monolithisch ausgebildet sind. Unverlierbar über am Mutterkörper 11 ausgebildete Sicherungsmittel 12 ist an dem Mutterkörper 11 ein von diesem durchsetztes, als Tellerfeder ausgebildetes Federteil 13 festgelegt, welches einen Federabschnitt der Befestigungsmutter 3 bildet, der in axialer Richtung im montierten Zustand vom Abgaskrümmer 2 weg, d. h. nach hinten vorgespannt bzw. ausgelenkt ist.

Die Sicherungsmittel 12 umfassen einen monolithisch mit dem Mutterkörper 11 ausgebildeten, vorderen Widerlagerabschnitt 14, der in dem konkreten Ausführungsbeispiel als Umfangswulst ausgebildet ist. An diesem Umfangswulst stützt sich das Federteil 13 mit einer ringförmigen Innenkonusfläche 16 formschlüssig ab. Mit der in Richtung eines axial von dem vorderen Ende 15 abgewandten hinteren Ende 17 des Mutterkörpers 11 bzw. der Befestigungsmutter 3 orientierten (hinteren) Axialseite stützt sich das Federteil 13 an einem hinteren axialen Widerlagerabschnitt 18 ab, der als Umfangsbund realisiert ist, der in dem gezeigten Ausführungsbeispiel eine größere Radialerstreckung aufweist als der Umfangswulst des vorderen Widerlagerabschnitts 14. Bei dem gezeigten Ausführungsbeispiel ist das tellerfederartige Federteil 13 axial bzw. sandwichartig zwischen den beiden axialen, voneinander axial beabstandeten Widerlagerabschnitten 14, 18 gefangen.

Zu erkennen ist aus den Figuren, dass das von dem Mutterkörper 11 separate Federteil 13 in Richtung des vorderen Endes 15 geneigt ist. Durch Verschrauben der Befestigungsmutter 3 auf den Außengewindebolzen 5 stützt sich das Federteil 13 mit einer (vorderen) zweiten Abstützfläche 19 mittelbar oder in dem gezeigten Ausführungsbeispiel unmittelbar auf dem Krümmerblech, d.h. dem Abgaskrümmer 2 ab und wird durch das Festziehen der Befestigungsmutter 3 elastisch in Richtung des hinteren Endes 17 ausgelenkt, d.h. vorgespannt. Hierdurch verkleinert sich ein Winkel a, der aufgespannt wird zwischen der in der Zeichnungsebene vorderen Axialseite (Stirnseite) des hinteren Widerlagerabschnitts 18 und der gegenüberliegenden, hinteren bzw. in Richtung hinterem Ende 17 zeigenden Oberseite (Axialseite) des Federteils 13. Im Ergebnis sorgt der hintere Widerlagerabschnitt 18 für eine Begrenzung der elastischen Auslenkbewegung des Federteils 13 beim Verschrauben mit dem Außengewindebolzen 5.

Im Bereich der vorderen Stirnseite, d.h. am vorderen Ende 15 des Mutterkörpers 11 ist eine ringförmige erste Abstützfläche 20 vorgesehen, mit der sich die Befestigungsmutter 11 im montierten Zustand an der vorerwähnten Flachdichtung oder unmittelbar am Zylinderkopf 4 abstützt.

Aus Fig. 4 ergibt sich weiter, dass der Mutterkörper 11 neben den fakultativen Bremsmomentmitteln 7 einen Innengewindeabschnitt 21 ausbildet, der in dem konkreten Ausführungsbeispiel, lediglich unterbrochen durch die Ringnut 8, axial durchgehend angeordnet ist und sich insbesondere auch in einem vorderen Abstützabschnitt 22 befindet, genauer an dessen Innenumfangsfläche.

Aus Fig. 4 ist zudem zu erkennen, dass die von der Innenkonusfläche 16 gebildete Kontaktfläche des Federteils 13 zum Mutterkörper 11 axial weiter von der ersten Abstützfläche 20 beabstandet ist als die zweite Abstützfläche 19, die axial und radial beabstandet ist von der ersten Abstützfläche 20.

Aus einer Zusammenschau der Fig. 3 bis 6 ergibt sich, dass monolithisch mit dem Mutterkörper 11 Antriebsmittel 23, hier in der Form mehrerer Schlüsselflächenpaare am Außenumfang ausgebildet sind, um mit einem Werkzeug drehmomentübertragend angreifen zu können.

Bei Bedarf können zur Erhöhung der Federkraft zusätzlich zu dem Federteil 13 weitere Federteile vorgesehen werden, insbesondere zwischen dem gezeigten Federteil 13 und dem hinteren Widerlagerabschnitt 18.

Im in Fig. 2 gezeigten, montierten Zustand des Verbrennungsmotors übt das Federteil 13 im elastisch vorgespannten Zustand eine axiale Anpresskraft auf den Abgaskrümmer 2 aus, der sich jedoch aufgrund des Spaltmaßes zwischen der Durchgangsöffnung 6 und dem Außengewindebolzen 5 relativ zur Befestigungsmutter 3 und zum Außengewindebolzen 5 verschieben kann, quasi unterhalb des Federteils 13 hindurch, während sich die Befestigungsmutter 3 axial über die erste Abstützfläche 20 entweder unmittelbar am Zylinderkopf 4 oder mittelbar über eine nicht gezeigte Flachdichtung abstützt.

Im Folgenden werden weitere, alternative nach dem Konzept der Erfindung ausgebildete Ausführungsbeispiele bzw. Realisierungsformen der Befestigungsmutter und deren grundsätzliche Anordnung am Verbrennungsmotor beschrieben, wobei zur Vermeidung von Wiederholungen im Wesentlichen auf die Unterschiede zu dem vorangehenden, nach dem Konzept der Erfindung ausgebildeten Ausführungsbeispiel gemäß den Fig. 1 bis 6 eingegangen wird. Im Hinblick auf die Gemeinsamkeiten wird auf das vorstehende Ausführungsbeispiel sowie die zugehörige Figurenbeschreibung verwiesen.

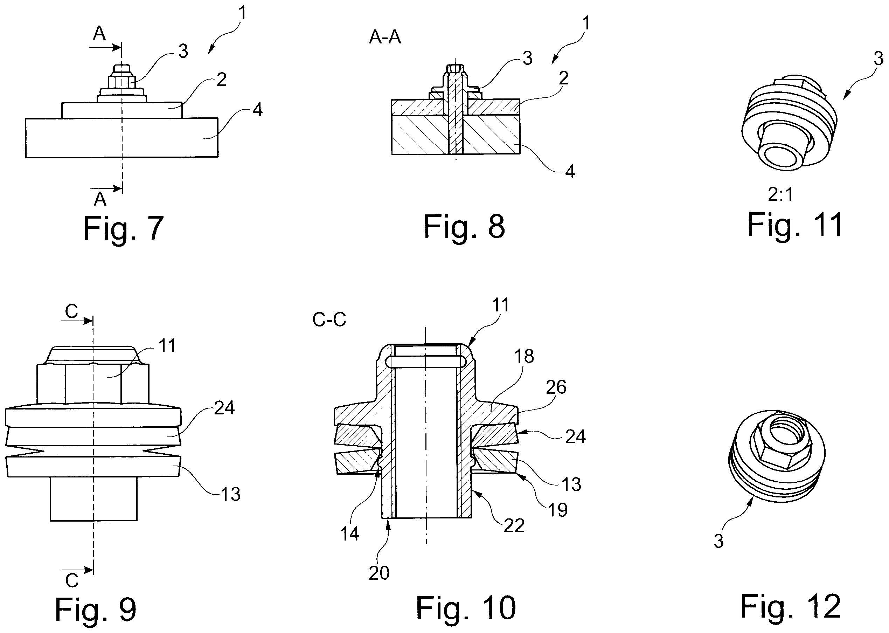

In den Fig. 7 und 8 (sowie 13 und 14, 19 und 20 sowie 25 und 26) ist ein Verbrennungsmotor 1 ausschnittsweise dargestellt zusammen mit einer Befestigungsmutter 3, die in der jeweiligen Darstellung dem Ausführungsbeispiel gemäß den Fig. 1 bis 6 entspricht, jedoch gedacht ersetzt werden kann durch das jeweilige, dann jeweils im Folgenden gezeigte bzw. beschriebene alternative Ausführungsbeispiel. Gleich bei allen Ausführungsvarianten ist, dass sich die Befestigungsmutter 3 mit ihrer zweiten, am Mutterkörper 11 bzw. an dessen Abstützabschnitt 22 ausgebildeten ersten Abstützfläche 20 am Zylinderkopf 4 abstützt und hierzu mit dem Abstützabschnitt 11 den Abgaskrümmer 2 axial durchsetzt. Die jeweilige Befestigungsschraube 3 ist dabei auf Block angezogen, derart, dass das jeweilige, mindestens eine Federteil in axialer Richtung vorgespannt ist und sich je nach Ausführungsform mittelbar oder unmittelbar (vorgespannt) am Abgaskrümmer 2 abstützt.

Bei dem Ausführungsbeispiel gemäß in Fig. 7 bis 12 ist zusätzlich zu dem ersten Federteil 13, welches die zweite Abstützfläche 19 anbietet ein weiteres, zweites Federteil 24 vorgesehen, welches unmittelbar axial benachbart zu dem (ersten) Federteil 13 angeordnet ist und zwar auf der von der ersten Abstützfläche 20 abgewandten Axialseite. Das zweite Federteil 24 stützt sich axial unmittelbar am ersten Federteil 13 ab und mit seiner davon abgewandten Axialseite und zwar mit einem radial äußeren Randbereich 26 axial an dem hinteren Widerlagerabschnitt 18, während der vordere Widerlagerabschnitt 14 zur axialen Sicherung der Federteile 13, 14 am Mutterkörper 11 dient. Zu erkennen ist, dass beide Federteile 13, 24 als Tellerfedern ausgebildet sind und dabei ineinander unterschiedliche, voneinander wegweisende Axialrichtungen gewölbt sind, sodass die radial äußeren Randbereiche der Federteile 13, 24 in axialer Richtung beabstandet sind. Diese axial äußeren Randbereiche nähern sich unter gleichzeitiger Spannung der Federteile 13, 24 einander an, wenn bzw. während die Mutter 3, wie eingangs erläutert, auf Block angezogen wird und sich mit der ersten Abstützfläche 24 am Zylinderkopf abstützt.

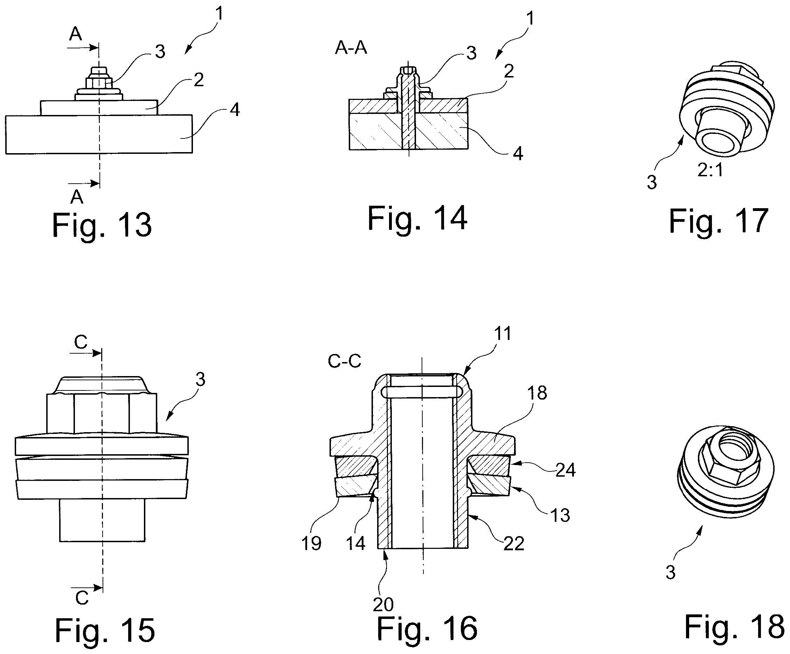

Das Ausführungsbeispiel gemäß Fig. 15 bis 18 unterscheidet sich von dem vorstehend erläuterten Ausführungsbeispiel lediglich dadurch, dass die beiden Federteile 13, 24 nicht ineinander entgegengesetzte Axialrichtungen, sondern in die gleiche Axialrichtung und zwar auf die erste Abstützfläche 20 zu gewölbt sind. Auch hier stützt sich das (erste) Federteil 13 mit seiner zweiten Abstützfläche 19 im montierten Zustand unmittelbar am Abgaskrümmer 2 ab.

Bei dem Ausführungsbeispiel gemäß Fig. 19 bis 24 ist zusätzlich zu den beiden, hier lediglich beispielhaft in die gleiche Axialrichtung gewölbten, tellerfederartigen Federteilen 13, 24 eine hülsen- bzw. klammerförmige Gleitscheibe 25 vorgesehen, die axial verschieblich am Mutterkörper 11 angeordnet und an diesem unverlierbar gesichert ist. Die Sicherung ist dadurch realisiert, dass sich die Gleitscheibe 25, die mit einem Anlageabschnitt 27 zur unmittelbaren Anlage am Abgaskrümmer 2 axial zwischen den Abstützflächen 19, 20 angeordnet ist mit einem Umfangswandabschnitt 28 in axialer Richtung von der ersten Abstützfläche 20 wegerstreckt und zwar in einem Bereich radial außerhalb bzw. benachbart der Federteile 23, 24, sodass diese radial außen umschlossen bzw. gekapselt werden, zusammen mit dem hinteren Widerlagerabschnitt 18. Letzterer wird, ebenso wie das Federteil 13 von der Gleitscheibe 25 bzw. dem Gleitelement umgriffen bzw. geklammert, sodass hierdurch nicht nur die Gleitscheibe 25 mit ihrem Anlageabschnitt 27, sondern auch die Federteile 13, 24 unverlierbar am Mutterkörper 11 gehalten werden. Bei dem vorliegenden Ausführungsbeispiel übernimmt die klammerartige Gleitscheibe 24 (Gleitelement, Kapselelement) hierbei die Funktion der Sicherungsmittel, sodass auf den vorderen Widerlagerabschnitt, der bei den vorerläuterten Ausführungsbeispielen vorhanden war, verzichtet werden kann. Wird die Befestigungsmutter 3 gemäß dem Ausführungsbeispiel gemäß den Fig. 9 bis 24 auf Block angezogen, so kommt die Gleitscheibe 25 mit ihrem Anlageabschnitt 27 zur Anlage am Abgaskrümmer 2, wobei während des dann folgenden, weiteren Verdrehens auf Block bis zur Anlage der ersten Abstützfläche 20 am Zylinderkopf 4 die Gleitscheibe 25 in axialer Richtung von der ersten Abstützfläche 20 weggedrückt wird und dann in axialer Richtung von dieser ersten Abstützfläche 20 wegwandert, wodurch die zwischen dem hinteren Anlageabschnitt 18 und dem Anlageabschnitt 27 aufgenommenen Federteile 13, 24 gespannt werden.

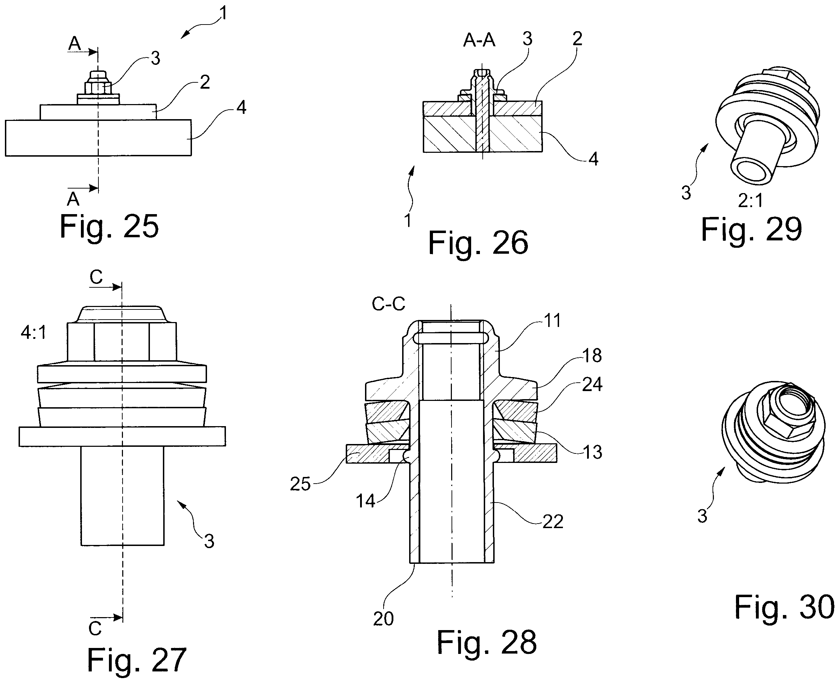

Bei dem Ausführungsbeispiel gemäß den Fig. 25 bis 30 ist die Gleitscheibe 25 nicht klammer- bzw. hülsenförmig ausgebildet, sondern besteht im Wesentlichen aus dem lochscheibenförmigen, axial verschiebbar angeordneten Anlageabschnitt 27 und wird axial gesichert von dem vorderen Widerlagerabschnitt 14, an dem sich die Gleitscheibe 25 bzw. der Anlageabschnitt 27 axial abstützt. Die Federteile 13, 24 sind zwischen dem Anlageabschnitt 27 und dem hinteren Widerlagerabschnitt 28 angeordnet und werden beim Verschrauben der Befestigungsmutter 3 auf Block durch Verstellen der Sicherungsscheibe 25 von der ersten Abstützfläche 20 weggespannt.

Im Unterschied zu den anderen Ausführungsbeispielen ist bei dem zuletzt beschriebenen Ausführungsbeispiel das Innengewinde nicht axial durchgehend realisiert (was alternativ möglich ist), sondern nur in einem verkürzten, oberen, von der zweiten Abstützfläche abgewandten und hierzu beabstandeten Abschnitt im Mutterkörper 11, im Bereich innerhalb des Antriebs und oberhalb der Federteile. Eine derartig verkürzte Ausführungsform des Gewindes ist auch bei den anderen zuvor beschriebenen Ausführungsbeispielen umsetzbar.

Ganz allgemein, unabhängig von den konkreten Ausführungsbeispielen ist es möglich für den Fall des Vorsehens einer Gleitscheibe das mindestens eine Federteil bereits vorgespannt zu montieren oder spannungsfrei.

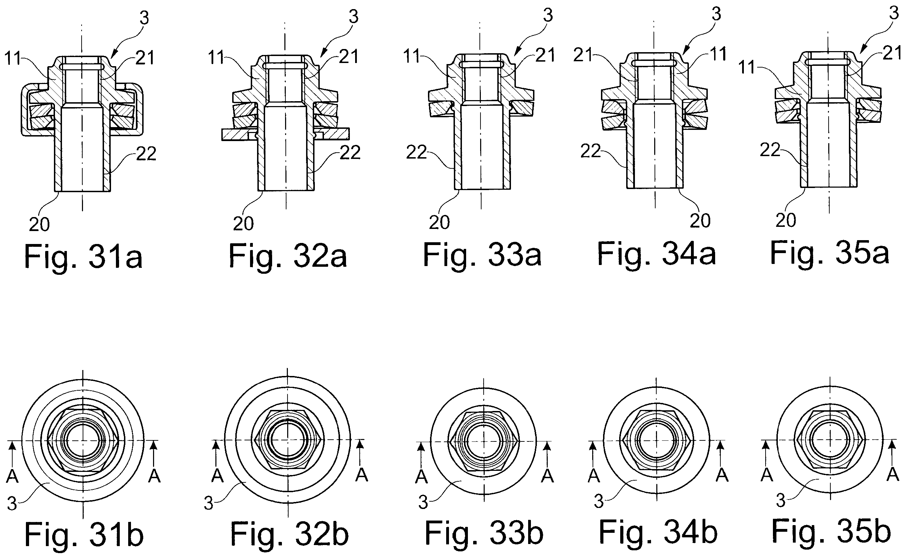

In den Fig. 31a bis Fig. 35b sind Befestigungsmuttern 3 gezeigt, deren grundsätzlicher Aufbau im Detail bereits erläutert wurde. Im Unterschied zu den in den Figuren 1 bis 24 gezeigten Ausführungsvarianten ist der Innengewindeabschnitt 21 jeweils axial verkürzt ausgebildet und befindet sich in einem von der jeweiligen ersten Abstützfläche 20 abgewandten axialen Endabschnitt des Mutterkörpers 11. Hierdurch wird eine verbesserte Dehnung des Verschraubungspartners (Außengewindebolzen bzw. Stehbolzen) erreicht. Bei sämtlichen Ausführungsvarianten ist hier lediglich beispielhaft der gesamte Abstützabschnitt 22 innengewindefrei ausgebildet. Da der Innendurchmesser des Abstützabschnittes verglichen mit dem Innendurchmesser des Innengewindeabschnittes 21 größer ausgeführt ist, wäre auch eine Ausbildung mit einem einen größeren Innendurchmesser als der Stehbolzen aufweisendem Innengewinde unschädlich - wesentlich für den Gedanken der Verbesserung der Dehnung des Außengewindebolzens ist, dass ein Axialabschnitt, insbesondere von über 50% des Mutterkörpers 11 nicht mit dem Außengewindebolzen verschraubbar bzw. verschraubt ist.

### Bezugszeichen

- 1: Verbrennungsmotor
- 2: Abgaskrümmer
- 3: Befestigungsmutter
- 4: Zylinderkopf
- 5: Außengewindebolzen
- 6: Durchgangsöffnung im Abgaskrümmer
- 7: Bremsmomentmittel
- 8: Ringnut der Bremsmomentmittel
- 9: Innengewindebereich
- 10: Innengewindebereich
- 11: Mutterkörper
- 12: Sicherungsmittel
- 13: Federteil
- 14: vorderer Widerlagerabschnitt
- 15: vorderes Ende
- 16: Innenkonusfläche
- 17: hinteres Ende
- 18: hinterer Widerlagerabschnitt
- 19: zweite Abstützfläche
- 20: erste Abstützfläche
- 21: Innengewindeabschnitt
- 22: Abstützabschnitt
- 23: Antriebsmittel
- 24: zweites Federteil
- 25: Gleitscheibe
- 26: radial äußerer Randbereich
- 27: Anlageabschnitt
- 28: Umfangswandabschnitt
- α: Winkel

## Patentansprüche

1. Befestigungsmutter (3) zum Festlegen eines Abgaskrümmers (2) an einem Zylinderkopf (4) eines Verbrennungsmotors (1) durch Verschrauben mit einem an dem Zylinderkopf (4) gehaltenen und eine Durchgangsöffnung (6) im Abgaskrümmer (2) durchsetzenden Außengewindebolzen (5), wobei die Befestigungsmutter (3) einen Innengewindeabschnitt (21) zum Verschrauben mit dem Außengewindebolzen (5) sowie vorzugsweise Bremsmomentmittel (7) zum Erhöhen des Lösemomentes umfasst, weiter umfassend eine erste Abstützfläche (20) zum mittelbaren oder unmittelbaren axialen Abstützen am Zylinderkopf (4) und/oder einer auf dem Zylinderkopf (4) aufliegenden Dichtung und umfassend eine zweite Abstützfläche (19) zum mittelbaren oder unmittelbaren axialen Abstützen am Abgaskrümmer (2), wobei die erste Abstützfläche (20), insbesondere stirnseitig, an einem Abstützabschnitt (22) der Befestigungsmutter (3) zum Durchsetzen der Durchgangsöffnung (6) angeordnet ist und die zweite Abstützfläche (19) an einem radial vorstehenden, in axialer Richtung elastisch vorspannbaren Federabschnitt mit Axial- und Radialabstand zu der ersten Abstützfläche (20) ausgebildet ist,
dass die Befestigungsmutter (3) mehrteilig ausgebildet ist und einen sich axial von einem hinteren Ende (17) bis zur ersten Abstützfläche (20) erstreckenden Mutterkörper (11) sowie ein davon separates, über Sicherungsmittel (12) unverlierbar an dem Mutterkörper (11) festgelegtes Federteil (13) umfasst, und dass an dem Mutterkörper (11) der Innengewindeabschnitt (21) und der Abstützabschnitt (22) mit seiner ersten Abstützfläche (20) ausgebildet sind, und dass das Federteil (13) den Federabschnitt mit seiner zweiten Abstützfläche (19) ausbildet
**dadurch gekennzeichnet, dass**
der Innengewindeabschnitt (21) axial verkürzt ausgebildet ist und sich in einem von der ersten Abstützfläche (20) abgewandten axialen Endabschnitt des Mutterkörpers (11) befindet, wobei der gesamte Abstützabschnitt (22) innengewindefrei ausgebildet ist und der Innendurchmesser des Abstützabschnittes (22) verglichen mit dem Innendurchmesser des Innengewindeabschnittes (21) größer ausgeführt ist, so dass ein Axialabschnitt, insbesondere von über 50%, des Mutterkörpers (11) nicht mit dem Außengewindebolzen verschraubbar oder verschraubt ist.

2. Befestigungsmutter nach Anspruch 1,
**dadurch gekennzeichnet,**
**dass** zusätzlich zu dem Federteil (13), insbesondere axial benachbart zu dem Federteil (13), mindestens ein, vorzugsweise ausschließlich ein, weiteres von dem Mutterkörper (11) separates, bevorzugt als Tellerfeder ausgebildetes, zweites Federteil (24) an dem Mutterkörper (11) über die Sicherungsmittel (12) unverlierbar festgelegt ist.

3. Befestigungsmutter nach einem der Anspruch 1 oder 2,
**dadurch gekennzeichnet,**
**dass** das, bevorzugt als geneigte und/oder gewölbte, weiter bevorzugt umfangsgeschlossene, Tellerfeder ausgebildete, Federteil (13) bezogen auf eine sich senkrecht zur Axialerstreckung des Mutterkörpers (11) erstreckenden Radialebene abgeschrägt oder gewölbt ist, vorzugsweise derart, dass ein, insbesondere ringförmiger, Kontaktbereich des Federteils (13) zum Mutterkörper (11) axial weiter von der ersten Abstützfläche (20) beabstandet ist als die zweite Abstützfläche (19).

4. Befestigungsmutter nach Anspruch 3, soweit rückbezogen auf Anspruchs 2,
**dadurch gekennzeichnet,**
**dass** beide Federteile (13, 24) in die gleiche Axialrichtung, insbesondere in Richtung der ersten Abstützfläche (20) oder in entgegengesetzte Axialrichtungen geneigt und/oder gewölbt sind, bevorzugt derart, dass deren radial äußere Randbereiche in unterschiedlicher Axialrichtungen weisen und/oder in axialer Richtung beabstandet sind.

5. Befestigungsmutter nach einem der vorhergehenden Ansprüche,
**dadurch gekennzeichnet,**
**dass** die Bremsmomentmittel (7) und/oder Antriebsmittel (23) monolithisch mit dem Mutterkörper (11) ausgebildet sind.

6. Befestigungsmutter nach einem der vorhergehenden Ansprüche,
**dadurch gekennzeichnet,**
**dass** der Mutterkörper (11) als Kaltfließpressteil aus Metall und/oder das Federteil (13) als Kaltumformteil, insbesondere Stanzteil aus Metall ausgebildet sind/ist.

7. Befestigungsmutter nach einem der vorhergehenden Ansprüche,
**dadurch gekennzeichnet,**
**dass** die Sicherungsmittel (12) einen, insbesondere durch Verstemmen ausgebildeten, axialen vorderen Widerlagerabschnitt, (14), insbesondere einen Ringwulst, am Mutterkörper (11) umfassen.

8. Befestigungsmutter nach Anspruch 7,
**dadurch gekennzeichnet,**
**dass** an dem Federteil (13) eine Aussparung, bevorzugt durch Vorsehen einer Innenkonusfläche (16), zur Anlage an dem axialen, vorderen Widerlagerabschnitt (14) ausgebildet ist.

9. Befestigungsmutter nach einem der vorhergehenden Ansprüche,
**dadurch gekennzeichnet,**
**dass** sich das Federteil (13) oder das zweite Federteil (24) mit seiner von der zweiten Abstützfläche (19) abgewandten Seite axial an einem monolithisch am Mutterkörper (11) ausgebildeten, insbesondere als Umfangsbund realisierten, hinteren Widerlagerabschnitt (18), abstützt, der bevorzugt eine maximale Vorspannung des Federteils (13) und/oder des zweiten Federteils (24) begrenzend ausgebildet und angeordnet ist.

10. Befestigungsmutter nach Anspruch 9,
**dadurch gekennzeichnet,**
**dass** eine dem hinteren axialen Widerlagerabschnitt (18) zugewandte Stirnseite des Federteils (13) und/oder des zweiten Federteils (24) mit einer dieser zugewandten Seite des hinteren Widerlagerabschnitts (18) eines Winkels (a) einschließt, der sich bei zunehmender elastischer Vorspannung des Federteils (13) und/oder des zweiten Federteils (24) verkleinert.

11. Befestigungsmutter nach einem der vorhergehenden Ansprüche,
**dadurch gekennzeichnet,**
**dass** der Innengewindeabschnitt (21) zumindest abschnittsweise am Innenumfang des Abstützabschnitts (22) des Mutterkörpers (11) ausgebildet ist, oder dass der Innenumfang des Abstützabschnitts (22) des Mutterkörpers (11) radial beabstandet ist von einer gedachten axialen Verlängerung des axial benachbart zu dem Abstützabschnitt (22) des Mutterkörpers (11) angeordneten Innengewindeabschnitts (21), so dass der Innenumfang des Abstützabschnitts (22) des Mutterkörpers (11) nach Verschrauben mit den Außengewindebolzen (5) radial von diesem beabstandet ist.

12. Befestigungsmutter nach einem der vorhergehenden Ansprüche,
**dadurch gekennzeichnet,**
**dass** die Bremsmomentmittel (7) eine Erhöhung der Reibung zwischen der Befestigungsmutter (3) und den Außengewindebolzen (5) aufgrund elastischer Verformung eines einen Innengewindeteilbereich tragenden Auslenkabschnitts bewirkend ausgebildet sind.

13. Befestigungsmutter nach einem der vorhergehenden Ansprüche,
**dadurch gekennzeichnet,**
**dass** axial benachbart zu dem Federteil (13) eine Gleitscheibe (25) angeordnet axial verschieblich, insbesondere über die Sicherungsmittel (12), unverlierbar am Mutterkörper (11) gesichert ist, zum axialen unmittelbaren oder mittelbaren Abstützen an Abgaskrümmer (2), und dass sich das Federteil (13) mit seiner zweiten Abstützfläche (19) axial an der Gleitscheibe (25) abstützt.

14. Befestigungsmutter nach Anspruch 13,
**dadurch gekennzeichnet,**
**dass** die Gleitscheibe (25) sich radial benachbart zu dem Federteil (13) in axialer Richtung von der ersten Abstützfläche (25) wegerstreckt, und das Federteil (13), vorzugsweise zusammen mit dem hinteren Widerlagerabschnitt (18) radial außen verdeckt, insbesondere axial übergreift.

15. Befestigungsmutter nach einem der Ansprüche 13 oder 14,
**dadurch gekennzeichnet,**
**dass** die Gleitscheibe (12) die axialen Sicherungsmittel (12) bildet, insbesondere indem die Gleitscheibe (25) das Federteil (13) und den hinteren Widerlagerabschnitt (18) umklammert.

16. Verbrennungsmotor (1) mit einem Zylinderkopf (4) an dem ein Abgaskrümmer (2) mithilfe mindestens einer Befestigungsmutter (3) nach einem der vorhergehenden Ansprüche festgelegt ist, wobei die Befestigungsmutter (3) mit einem am Zylinderkopf (4) gehaltenen und eine Durchgangsöffnung (6) im Abgaskrümmer (2) durchsetzenden Außengewindebolzen (5) mit ihrem Innengewindeabschnitt (21), insbesondere unter Wechselwirkung von Bremsmomentmittel (21) mit dem Außengewindebolzen, (5) aufgeschraubt ist und den Abgaskrümmer (2) in Richtung Zylinderkopf (4) mittels des Federteils (13) kraftbeaufschlagt, welches elastisch von dem Abgaskrümmer (2) weg ausgelenkt ist und sich in axialer Richtung mit seiner zweiten Abstützfläche (19) mittelbar oder unmittelbar auf dem Abgaskrümmer (2) abstützt, während sich der Mutterkörper (11) mit seiner ersten Abstützfläche (20) mittelbar, insbesondere über eine fakultative Gleitscheibe der Befestigungsmutter (3) oder ein von der Befestigungsmutter separates Gleitelement, insbesondere ein Gleitblech oder unmittelbar am Zylinderkopf (4) oder einer auf dem Zylinderkopf (4) aufliegenden Dichtung abstützt.

17. Verbrennungsmotor nach Anspruch 16,
**dadurch gekennzeichnet,**
**dass** der Abstützabschnitt (22) mit Radialspiel zum Abgaskrümmer (2) und/oder mit Radialspiel zu dem Rand einer von dem Außengewindebolzen (5) durchsetzten Öffnung im Zylinderkopf (4) angeordnet ist.

## Claims

1. A fastening nut (3) for fastening an exhaust manifold (2) to a cylinder head (4) of an internal combustion engine (1) by screwing it onto an external threaded bolt (5) retained on the cylinder head (4) and passing through a passage opening (6) in the exhaust manifold (2), the fastening nut (3) comprising an internal thread section (21) for screwing it onto the external threaded bolt (5) and, preferably, braking torque means (7) for increasing the loosening torque, the fastening nut (3) also comprising a first supporting surface (20) for the indirect or direct axial support on the cylinder head (4) and/or a seal lying on the cylinder head (4) and comprising a second supporting surface (19) for the indirect or direct axial support on the exhaust manifold (2), the first supporting surface (20) being disposed, in particular on an end face, at a supporting section (22) of the fastening nut (3) for passing through the passage opening (6) and the second supporting surface (19) being realized at a radially protruding spring section which is elastically preloaded in the axial direction at an axial and radial distance to the first supporting surface (20),
that the fastening nut (3) is realized in multiple parts and comprises a nut body (11) which extends in an axial manner from a rear end (17) to the first supporting surface (20) and a separate spring part (13) which is fastened to the nut body (11) in a captive manner via securing means (12), and that the internal thread section (21) and the supporting section (22) comprising its first supporting surface (20) are realized at the nut body (11), and that the spring part (13) realizes the spring section comprising its second supporting surface (19),
**characterized in that**
the internal thread section (21) is realized in an axially shortened manner and is located in an end portion of the nut body (11) which faces away from the first supporting surface (20), the entire supporting section (22) being realized without an internal thread and that the internal diameter of the supporting section (22) is larger than the internal diameter of the internal thread section (21), an axial section, in particular of more than 50 %, of the nut body (11) thus not being screwable or screwed onto the external threaded bolt.

2. The fastening nut according to claim 1,
**characterized in that**,
in addition to the spring part (13), in particular axially adjacent to the spring part (13), at least one, preferably exclusively one, second spring part (24) which is separate from the nut body (11) and which is preferably realized as a Belleville washer is fastened to the nut body (11) in a captive manner via the securing means (12).

3. The fastening nut according to claim 1 or 2,
**characterized in that**
the spring part (13), which is preferably realized as an inclined and/or arched, more preferably circumferentially closed, Belleville washer is chamfered or arched in relation to a radial plane which extends perpendicularly to the axial extension of the nut body (11), preferably in such a manner that an, in particular annular, contact area of the spring part (13) to the nut body (11) is axially spaced apart from the first supporting surface (20) at a greater distance than the second supporting surface (19).

4. The fastening nut according to claim 3, referring back to claim 2,
**characterized in that**
both spring parts (13, 24) are inclined and/or arched in the same axial direction, in particular in the direction of the first supporting surface (20) or in opposite axial directions, preferably in such a manner that the radially outer peripheral areas point in different axial directions and/or are spaced apart in the axial direction.

5. The fastening nut according to any one of the preceding claims,
**characterized in that**
the braking torque means (7) and/or drive means (23) are monolithically realized with the nut body (11).

6. The fastening nut according to any one of the preceding claims,
**characterized in that**
the nut body (11) is realized as a cold press part made of metal and/or the spring part (13) is realized as a cold formed part, in particular a punched part made of metal.

7. The fastening nut according to any one of the preceding claims,
**characterized in that**
the securing means (12) comprise an axial front abutment section (14), in particular an annular bead, in particular realized by caulking, at the nut body (11).

8. The fastening nut according to claim 7,
**characterized in that**
a recess is realized at the spring part (13), preferably by providing an internal cone surface (16), for contacting the axial front abutment section (14).

9. The fastening nut according to any one of the preceding claims,
**characterized in that**
a rear abutment section (18) which is monolithically realized at the nut body (11), in particular realized as a circumferential flange, axially supports the spring part (13) or the second spring part (24) on the side which faces away from the second supporting surface (19), said rear abutment section (18) being realized and disposed so as to limit a maximum preload of the spring part (13) and/or of the second spring part (24).

10. The fastening nut according to claim 9,
**characterized in that**
an end face of the spring part (13) and/or of the second spring part (24) which faces the rear axial abutment section (18) includes an angle (α) on a side of the rear abutment section (18) which faces said end face, the angle (α) diminishing when the elastic preload of the spring part (13) and/or of the second spring part (24) increases.

11. The fastening nut according to any one of the preceding claims,
**characterized in that**
the internal thread section (21) is at least sectionwise realized at the internal circumference of the supporting section (22) of the nut body (11), or that the internal circumference of the supporting section (22) of the nut body (11) is radially spaced apart from an imagery axial elongation of the internal thread section (21) which is disposed axially adjacent to the supporting section (22) of the nut body (11), the internal circumference of the supporting section (22) of the nut body (11), the internal circumference of the supporting section (22) of the nut body (11) thus being radially spaced apart from the external threaded bolt (5) after screwing it onto said external threaded bolt (5).

12. The fastening nut according to any one of the preceding claims,
**characterized in that**
the braking torque means (7) are realized for causing an increase of the friction between the fastening nut (3) and the external threaded bolt (5) owing to elastic deformation of a deflection section which supports a partial area of the internal thread.

13. The fastening nut according to any one of the preceding claims,
**characterized in that**
a sliding disc (25) is disposed axially adjacent to the spring part (13), said sliding disc (25) being axially displaceable and secured in a captive manner at the nut body (11), in particular via the securing means (12), for the direct or indirect axial support at the exhaust manifold (2), and that the spring part (13) is axially supported by the sliding disc (25) on its second supporting surface (19).

14. The fastening nut according to claim 13,
**characterized in that**
the sliding disc (25) extends radially adjacent to the spring part (13) in the axial direction from the first supporting surface (25), and that the sliding disc (25) covers the spring part (13), preferably together with the rear abutment section (18) on the radial outside, in particular overlaps in an axial manner.

15. The fastening nut according to claim 13 or 14,
**characterized in that**
the sliding disc (25) realizes the axial securing means (12), in particular by the fact that the sliding disc (25) clasps the spring part (13) and the rear abutment section (18).

16. An internal combustion engine (1) having a cylinder head (4) to which an exhaust manifold (2) is fastened by means of at least one fastening nut (3) according to any one of the preceding claims, the internal thread section (21) of the fastening nut (3) being screwed onto an external threaded bolt (5) retained on the cylinder head (4) and passing through a passage opening (6) in the exhaust manifold (2), in particular by an interaction of braking torque means (7) and the external threaded bolt (5), and a force being applied to the exhaust manifold (2) in the direction of the cylinder head (4) by means of the spring part (13), said spring part (13) being elastically deflected from the exhaust manifold (2) and the second supporting surface (19) of the spring part (13) being indirectly or directly supported by the exhaust manifold (2) in the axial direction, the first supporting surface (20) of the nut body (11) being indirectly supported, in particular via a facultative sliding disc of the fastening nut (3) or a sliding element which is separate from the fastening nut, in particular a sliding plate, or directly supported at the cylinder head (4) or a seal lying on the cylinder head (4).

17. The internal combustion engine according to claim 16,
**characterized in that**
the supporting section (22) is disposed having a radial clearance to the exhaust manifold (2) and/or having a radial clearance to the edge of an opening in the cylinder head (4), the external threaded bolt (5) passing through said opening.

## Revendications

1. Écrou de fixation (3) pour fixer un collecteur d'échappement (2) à une culasse (4) d'un moteur à combustion interne (1) par un vissage sur un goujon fileté extérieur (5) maintenu au niveau de la culasse (4) et traversant une ouverture traversante (6) dans le collecteur d'échappement (2), l'écrou de fixation (3) comprenant une partie filetée intérieure (21) pour un vissage avec le goujon fileté extérieur (5) et comprenant, de préférence, des moyens de couple de freinage (7) permettant d'accroître le couple de relâchement, l'écrou de fixation (3) comprenant aussi une première surface d'appui (20) pour l'appui axial indirect ou direct contre la culasse (4) et/ou contre un joint reposant sur la culasse (4) et comprenant une deuxième surface d'appui (19) pour l'appui axial indirect ou direct contre le collecteur d'échappement (2), la première surface d'appui (20) étant disposée, notamment à un côté avant, sur une partie d'appui (22) de l'écrou de fixation (3) pour traverser l'ouverture traversante (6) et la deuxième surface d'appui (19) étant réalisée au niveau d'une partie de ressort saillante dans le plan radial et précontrainte de façon élastique dans la direction axiale à une distance axiale et radiale par rapport à la première surface d'appui (20),
que l'écrou de fixation (3) est réalisé en plusieurs parts et comprend un corps d'écrou (11) qui s'étend de manière axiale d'une extrémité arrière (17) à la première surface d'appui (20) et un élément de ressort (13) séparé qui est fixé de manière imperdable sur le corps d'écrou (11) via des moyens de fixation (12), et que la partie filetée intérieure (21) et la partie d'appui (22) comprenant sa première surface d'appui (20) sont réalisés sur le corps d'écrou (11), et que l'élément de ressort (13) réalise la partie de ressort comprenant sa deuxième surface d'appui (19),
**caractérisé en ce que**
la partie filetée intérieure (21) est réalisée de manière raccourcie dans le plan axial et que ladite partie filetée intérieure (21) est logée dans une partie d'extrémité axiale du corps d'écrou (11) qui est opposée à la première surface d'appui (20), la partie d'appui (22) entière étant réalisée sans filet intérieur et le diamètre intérieur de la partie d'appui (22) est plus grand que le diamètre intérieur de la partie filetée intérieure (21), une partie axiale, notamment de plus de 50 %, du corps d'écrou (11) ne pouvant pas être ou n'étant pas vissée avec le goujon fileté extérieur.

2. Écrou de fixation selon la revendication 1,
**caractérisé en ce**
**qu'**au moins un, de préférence exclusivement un, deuxième élément de ressort (24), de préférence réalisé comme rondelle Belleville, qui est séparé du corps d'écrou (11) est fixé de manière imperdable sur le corps d'écrou (11) via les moyens de fixation (12) en plus de l'élément de ressort (13), notamment axialement adjacent à l'élément de ressort (13).

3. Écrou de fixation selon la revendication 1 ou la revendication 2,
**caractérisé en ce que**
l'élément de ressort (13), de préférence réalisé comme rondelle Belleville inclinée et/ou bombée, plus préférentiellement fermée sur sa circonférence, est chanfreiné ou bombé par rapport à un plan radial qui s'étend perpendiculairement à l'extension axiale du corps d'écrou (11), de préférence de telle manière qu'une zone de contact, notamment annulaire, de l'élément de ressort (13) par rapport au corps d'écrou (11) est plus espacée de manière axiale de la première surface d'appui (20) que de la deuxième surface d'appui (19).

4. Écrou de fixation selon la revendication 3, en se référant à la revendication 2,
**caractérisé en ce que**
les deux éléments de ressort (13, 24) sont inclinés et/ou bombés dans la même direction axiale, notamment dans la direction de la première surface d'appui (20) ou dans des directions axiales opposées, de préférence de telle manière que les zones de bord à l'extérieur radial s'orientent dans des direction axiales différentes et/ou sont espacées dans la direction axiale.

5. Écrou de fixation selon l'une quelconque des revendications précédentes,
**caractérisé en ce que**
les moyens de couple de freinage (7) et/ou les moyens d'entraînement (23) sont réalisés de manière monolithique avec le corps d'écrou (11).

6. Écrou de fixation selon l'une quelconque des revendications précédentes,
**caractérisé en ce que**
le corps d'écrou (11) est réalisé comme pièce extrudée à froid en métal et/ou que l'élément de ressort (13) est réalisé comme pièce déformée à froid, notamment comme pièce découpée en métal.

7. Écrou de fixation selon l'une quelconque des revendications précédentes,
**caractérisé en ce que**
les moyens de fixation (12) comprennent une partie de butée (14) axialement à l'avant, notamment réalisée par matage, au corps d'écrou (11), notamment un bourrelet annulaire.

8. Écrou de fixation selon la revendication 7,
**caractérisé en ce**
**qu'**une encoche est réalisée sur l'élément de ressort (13), de préférence en prévoyant une surface conique intérieure (16), pour contacter la partie de butée (14) axialement à l'avant.

9. Écrou de fixation selon l'une quelconque des revendications précédentes,
**caractérisé en ce que**
l'élément de ressort (13) ou le deuxième élément de ressort (24) s'appuie axialement contre une partie de butée (18) arrière du côté opposé à la deuxième surface d'appui (19), ladite partie de butée (18), notamment réalisée comme ceinture circonférentielle, étant réalisée de manière monolithique au corps d'écrou (11) et étant réalisée et disposée, de préférence, pour limiter une précontrainte maximale de l'élément de ressort (13) et/ou du deuxième élément de ressort (24).

10. Écrou de fixation selon la revendication 9,
**caractérisé en ce**
**qu'**un côté avant de l'élément de ressort (13) et/ou du deuxième élément de ressort (24) qui fait face à la partie de butée (18) axiale arrière définit un angle (a) au côté qui fait face audit côté avant, ledit angle (a) étant réduit quand la précontrainte élastique de l'élément de ressort (13) et/ou du deuxième élément de ressort (14) augmente.

11. Écrou de fixation selon l'une quelconque des revendications précédentes,
**caractérisé en ce que**
la partie filetée intérieure (21) est, au moins par sections, réalisée sur la circonférence intérieure de la partie d'appui (22) du corps d'écrou (11) ou que la circonférence intérieure de la partie d'appui (22) du corps d'écrou (11) est espacée de manière radiale d'un prolongement axial théorique de la partie filetée intérieure (21) qui est disposée axialement adjacente à la partie d'appui (22) du corps d'écrou (11), la circonférence intérieure de la partie d'appui (22) du corps d'écrou (11) étant espacée de manière radiale après le vissage avec le goujon fileté extérieur (5).

12. Écrou de fixation selon l'une quelconque des revendications précédentes,
**caractérisé en ce que**
les moyens de couple de freinage (7) sont réalisés pour provoquer une augmentation du frottement entre l'écrou de fixation (3) et le goujon fileté extérieur (5) sur la base de la déformation élastique d'une partie de déviation qui supporte une portion filetée intérieure.

13. Écrou de fixation selon l'une quelconque des revendications précédentes,
**caractérisé en ce**
**qu'**un disque glissant (25) est disposé de manière déplaçable adjacent à l'élément de ressort (13) dans le plan axial, ledit disque glissant (25) étant fixé de manière imperdable sur le corps d'écrou (11), notamment via les moyens de fixation (12), pour l'appui axial direct ou indirect contre le collecteur d'échappement (2), et que la deuxième surface d'appui (19) de l'élément de ressort (13) s'appuie axialement contre le disque glissant (25).

14. Écrou de fixation selon la revendication 13,
**caractérisé en ce que**
le disque glissant (25) s'étend radialement adjacent à l'élément de ressort (13) dans la direction axiale à partir de la première surface d'appui (20), et que le disque glissant (25) couvre la partie de ressort (13), de préférence en coopération avec la partie de butée (18) arrière à l'extérieur radial, notamment recouvre dans le sens axial.

15. Écrou de fixation selon la revendication 13 ou la revendication 14,
**caractérisé en ce que**
le disque glissant (25) réalise les moyens de fixation (12) axiaux, notamment par le fait que le disque glissant (25) serre l'élément de ressort (13) et la partie de butée (18) arrière.

16. Moteur à combustion interne (1) ayant une culasse (4) à laquelle un collecteur d'échappement (2) est fixé à l'aide d'un écrou de fixation (3) selon l'une quelconque des revendications précédentes, la partie filetée intérieure de l'écrou de fixation (3) étant vissée sur un goujon fileté extérieur (5) maintenu au niveau de la culasse (4) et traversant une ouverture traversante (6) dans le collecteur d'échappement (2), notamment par une interaction entre des moyens de couple de freinage (7) et le goujon fileté extérieur (5) et l'écrou de fixation (3) appliquant une force au collecteur d'échappement (2) dans la direction de la culasse (4) au moyen de l'élément de ressort (13) qui est dévié de manière élastique du collecteur d'échappement (2) et qui s'appuie indirectement ou directement contre le collecteur d'échappement (2) au moyen de sa deuxième surface d'appui (19), la première surface d'appui (20) du corps d'écrou (11) s'appuyant indirectement, notamment via un disque glissant facultatif de l'écrou de fixation (3) ou un élément glissant qui est séparé de l'écrou de fixation, notamment une tôle glissante, ou directement contre la culasse (4) ou contre un joint reposant sur la culasse (4).

17. Moteur à combustion interne selon la revendication 16,
**caractérisé en ce que**
la partie d'appui (22) est disposée dans la culasse (4) avec un jeu radial par rapport au collecteur d'échappement (2) et/ou avec un jeu radial par rapport au bord d'une ouverture qui est traversée par le goujon fileté extérieur (5).
